# EUROPÄISCHE PATENTSCHRIFT

(11) **EP 1 398 211 B1**
(45) Veröffentlichungstag und Bekanntmachung des Hinweises auf die Patenterteilung: **23.09.2009**
(21) Anmeldenummer: 03006983.5
(22) Anmeldetag: 27.03.2003
(51) Int. Cl.: B60Q 1/14

(54) **Vorrichtung zum automatischen Steuern von Beleuchtungseinrichtungen**
Device for automatic switching of lighting devices
Dispositif pour l'allumage automatique de dispositifs d'éclairage

(30) Priorität: 10.09.2002 DE 10241895
(43) Veröffentlichungstag der Anmeldung: 17.03.2004
(73) Patentinhaber: ROBERT BOSCH GMBH, 70442 Stuttgart (DE)
(72) Erfinder: Schmitt, Patrick, 77839 Lichtenau (DE); Hodapp, Bruno, 77855 Achern-Oensbach (DE); Meier, Hans, 77833 Ottersweier (DE); Blitzke, Henry, 77815 Buehl (DE)

(56) Entgegenhaltungen:
- EP-A- 0 911 216
- WO-A-97/27077
- DE-A1- 19 523 262
- DE-A1- 19 740 928
- DE-A1- 19 921 997
- DE-A1- 19 957 210
- US-A- 5 952 917
- US-A1- 2001 033 491

## Beschreibung

### Stand der Technik

Die Erfindung betrifft eine Vorrichtung und ein Verfahren zum automatischen Steuern von Beleuchtungseinrichtungen nach Gattung des unabhängigen Anspruchs.

Es ist bereits eine Vorrichtung zum automatischen Steuern von Beleuchtungseinrichtungen aus der DE 199 33 642 A1 bekannt, bei der ein Globalsensor vorgesehen ist, der die Umgebungshelligkeit im Frontbereich eines Kraftfahrzeugs erfasst und helligkeitsabhängige erste Signale an eine Steuereinrichtung vermittelt. Darüber hinaus weist diese Vorrichtung einen Richtungssensor auf, der die Helligkeit in Vorwärtsrichtung des Kraftfahrzeugs erfasst.

Bei derartigen Vorrichtungen können bei ungünstigem Sonnenstand Fehlschaltungen auftreten, sodass die Beleuchtungseinrichtungen von der Vorrichtung ausgeschaltet werden, obwohl die Helligkeitsbedingungen im Straßenverkehr dieses noch nicht zulassen. Dies tritt insbesondere dann auf, wenn in den Morgenstunden und in den frühen Abendstunden die Sonne tief am Himmel steht und trotz einer niedrigen Gesamthelligkeit das Kraftfahrzeug von vorne oder von hinten direkt von der Sonne angeleuchtet wird. Durch eine derartige Bestrahlung wird der Vorrichtung eine Helligkeitssituation vermittelt, die nicht den tatsächlichen Verhältnissen entspricht.

Aus der DE-A-197 40 928 ist eine Vorrichtung zum automatischen Steuern von Beleuchtungseinrichtungen mit den Merkmalen des Oberbegriffs des Anspruchs 1 bekannt. Weiterhin ist aus der EP-A-0 911216 eine Vorrichtung zum automatischen Steuern von Beleuchtungseinrichtungen bekannt, bei der verschiedene Sensoren vorgesehen sind und die Beleuchtungseinrichtungen des Kraftfahrzeugs solange eingeschaltet bleiben, solange einer dieser Sensoren eine dunkle Zone erfasst.

### Vorteile der Erfindung

Die erfindungsgemäße Vorrichtung mit den Merkmalen des Hauptanspruchs hat den Vorteil, dass durch die Anordnung eines zweiten Globalsensors, der die Helligkeit im Heckbereich des Kraftfahrzeugs erfasst und helligkeitsabhängige zweite Signale an die Steuereinrichtung vermittelt, Fehlschaltungen vermieden werden und die Beleuchtungseinrichtungen optimal gesteuert werden.

Durch eine unterschiedliche Gewichtung der ersten und zweiten Signale des ersten und zweiten Globalsensors wird das Steuerverhalten verbessert. Besonders vorteilhaft ist es, wenn das Signal, welches der höheren Helligkeit entspricht, bei der Auswertung im Wesentlichen unberücksichtigt bleibt.

Auf diese Weise können tiefstehende Sonnenstände und andere Messwertverfälschungen erkannt und ignoriert werden.

Durch die in den Unteransprüchen aufgeführten Maßnahmen ergeben sich vorteilhafte Weiterbildungen und Verbesserungen der im Hauptanspruch angegebenen Merkmale.

Eine elegante Lösung ergibt sich dadurch, dass der zweite Globalsensor über ein CAN-, LIN- oder ISO-Protokoll mit der Steuereinrichtung verbunden ist.

Weiterhin vorteilhaft ist es, wenn der zweite Globalsensor durch einen Lichtleiter mit der Steuereinrichtung verbunden ist.

In einer besonders einfachen Variante ist der zweite Globalsensor mittels einer analogen Leitung mit der Steuereinrichtung verbunden.

Weiterhin ist es besonders vorteilhaft, wenn die Beleuchtungseinrichtungen nur dann ausgeschaltet werden, wenn dritte Signale des Richtungssensors und das der höheren Helligkeit entsprechende erste oder zweite Signal definierte Schwellen über- bzw. unterschreiten.

### Zeichnungen

Ein Ausführungsbeispiel der Erfindung ist in den Zeichnungen dargestellt und in der nachfolgenden Beschreibung näher erläutert. Es zeigen:
Figur 1 ein Kraftfahrzeug mit einer erfindungsgemäßen Vorrichtung,
Figur 2 eine schematische Zeichnung einer erfindungsgemäßen Vorrichtung und
Figur 3 ein Blockschaltbild einer erfindungsgemäßen Vorrichtung.

### Beschreibung des Ausführungsbeispiels

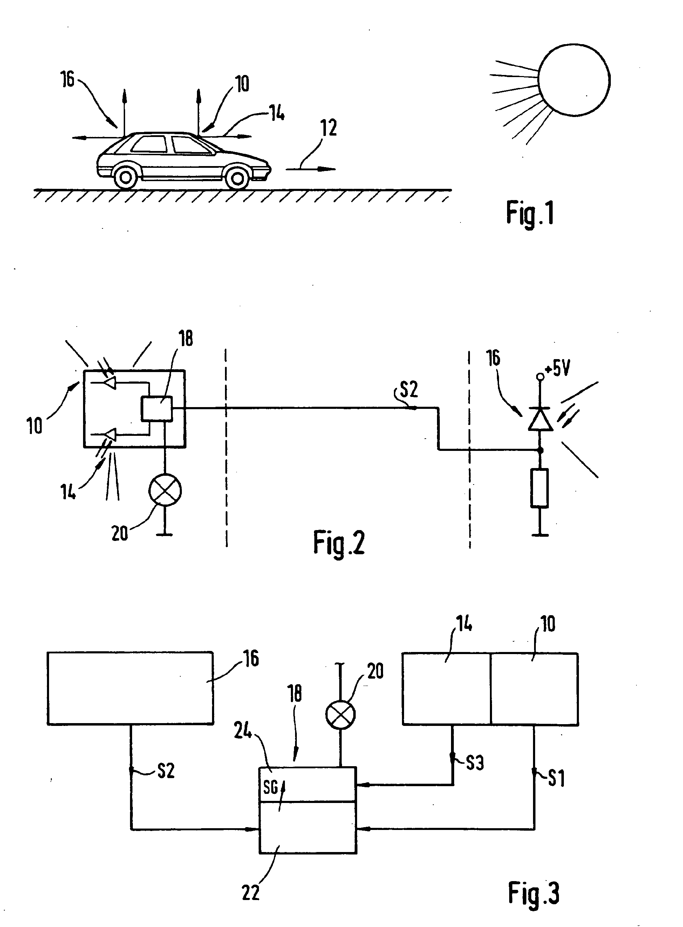

Figur 1 zeigt ein Kraftfahrzeug mit einer erfindungsgemäßen Vorrichtung in schematischer Darstellung. Im Frontbereich des Kraftfahrzeugs ist ein erster Globalsensor 10 angeordnet. Die Fahrtrichtung des Kraftfahrzeugs ist mit dem Pfeil 12 gekennzeichnet. Zusätzlich weist die Vorrichtung einen Richtungssensor 14 auf. Erster Globalsensor 10 und Richtungssensor 14 bilden eine einzige kompakte Baueinheit.

Der Globalsensor 10 ist derart ausgebildet, dass er die Umgebungshelligkeit im Frontbereich des Kraftfahrzeugs detektiert und hierzu einen großen Öffnungswinkel aufweist. Der Richtungssensor 14 ist in Fahrtrichtung gerichtet und weist einen im Verhältnis zum Globalsensor kleinen Öffnungswinkel auf um Licht zu detektieren, das direkt aus der Fahrtrichtung des Fahrzeugs einfällt. Dieser dient im Regelfall dazu, Helligkeitsabfälle vor Tunneln und Brückendurchfahrten zu erkennen.

Im Heckbereich des Kraftfahrzeugs ist ein zweiter Globalsensor 16 angeordnet, der ebenso wie der erste Globalsensor 10 einen großen Öffnungswinkel aufweist und die Umgebungshelligkeit im Heckbereich des Kraftfahrzeugs zu detektieren vermag. Der zweite Globalsensor 16 kann natürlich auch über eine leichte Richtcharakteristik verfügen und beispielsweise nur Licht detektieren, das aus der Rückwärtsrichtung des Fahrzeugs einstrahlt. Ein solcher Öffnungskegel kann beispielsweise einen Öffnungswinkel von etwa 90 Grad aufweisen und im wesentlichen in Rückwärtsrichtung ausgerichtet sein. Es sind jedoch auch andere Öffnungswinkel, beispielsweise 70 Grad oder 120 Grad möglich die auch mit einer Variation der Richtung, beispielsweise leicht nach oben oder unten, kombiniert werden können.

In Figur 2 ist die erfindungsgemäße Vorrichtung in schematischer Darstellung gezeigt. Die erfindungsgemäße Vorrichtung weist einen Globalsensor 10 mit einem großen Öffnungswinkel auf sowie einen Richtungssensor 14 mit einem kleinen Öffnungswinkel. Darüber hinaus weist die Vorrichtung eine Steuereinrichtung 18 auf, die mit den Beleuchtungseinrichtungen 20 verbinden ist und diese zu steuern vermag. Die Steuereinrichtung 18 ist darüber hinaus über eine einfache analoge Leitung mit dem zweiten Globalsensor 16 verbunden, der im Heckbereich des Kraftfahrzeugs angeordnet ist. Im einfachsten Falle umfasst der zweite Globalsensor 16 eine einfache Fotodiode, die mit einem Widerstand in Reihe geschaltet ist. In einer einfachen Variante können hierbei auch Halbleiterfotodetektoren, beispielsweise in Form beidseitig kontaktierter Halbleiterdickfilmstreifen, zum Einsatz kommen.

Figur 3 zeigt ein Blockschaltbild der erfindungsgemäßen Vorrichtung. Der erste Globalsensor 10 sowie der Richtungssensor 14 sind mit der Steuereinrichtung 18 verbunden. Der erste Globalsensor 10 übermittelt erste Signale S 1 an die Steuereinrichtung 18. Ebenso mit der Steuereinrichtung 18 ist der zweite Globalsensor 16 verbunden, der zweite Signale S2 an die Steuereinrichtung 18 übermittelt. Die Steuereinrichtung 18 weist eine Komparatorstufe 22 auf, welche die ersten und zweiten Signale miteinander vergleicht. Dasjenige der ersten und zweiten Signale S1, S2 wird zur weiteren Steuerung herangezogen, welches der niedrigeren Helligkeit entspricht. Dazu leitet die Komparatorstufe 22 das erste oder zweite Signal S1, S2 an eine Steuerstufe 24 weiter. Der Richtungssensor 14 übermittelt dritte Signale S3 an die Steuerstufe 24 der Steuereinrichtung 18. Die Steuerstufe 24 erhält damit das erste oder zweite Signal S1, S2 aus der Komparatorstufe 22 und das dritte Signal S3 aus dem Richtungssensor 14 und vergleicht diese miteinander. In Abhängigkeit dieser beiden Signale S1 oder S2 und S3 steuert die Steuerstufe 24 die Beleuchtungseinrichtungen 20. Prinzipiell kann auf den Richtungssensorsignal S3 auch verzichtet werden und die Beleuchtungseinrichtungen 20 nur in Abhängigkeit der ersten und zweiten Signale S1, S2 geschaltet werden. Typischerweise werden die Beleuchtungseinrichtungen 20 dann eingeschaltet, wenn die Signale S1, S2, S2 bestimmte Schwellen SW über- beziehungsweise unterschreiten.

In einer Variation der Erfindung kann die Verbindung zwischen dem zweiten Globalsensor 16 und der Steuereinrichtung 18 auch über einen Fahrzeugbus, beispielsweise einen CAN-Bus, eine LIN- oder ISO-Protokollverbindung vorgesehen werden.

In einer weiteren Variation ist auch die Ausbildung als Lichtleiter denkbar. In einem solchen Falle wäre das lichtempfindliche Element des zweiten Globalsensors 16 nicht im Heckbereich des Kraftfahrzeugs anzuordnen, sondern kann an beliebiger Stelle angeordnet werden.

Weiters ist es auch vorgesehen, dass die Komparatorstufe 22 verschiedene Gewichtungen für das erste und zweite Signal S 1 und S2 vornimmt und ein daraus ermitteltes gewichtetes Signal SG an die Steuerstufe 24 übermittelt. Die Komparatorstufe 22 kann natürlich aus das erste und zweite Signal S1, S2 entsprechen gewichten und beide an die Steuerstufe 24 übermitteln, die dann die drei Signale selbst bewertet.

In einer weiteren Ausgestaltung kann sowohl der erste Globalsensor 10 wie auch der zweite Globalsensor 16 zusammen mit einer Regensensoreinrichtung in einem gemeinsamen Gehäuse als kompakte Baugruppe ausgebildet werden. Die Signale der Global- und Richtungssensoren 10, 14, 16 könnnen so auch der Regensensoreinrichtung zur Verbesserung ihrer Funktion übermittelt werden.

Dies bietet sich besonders dann an, wenn die Regensensoreinrichtung auf einem optischen Prinzip auf der Windschutzscheibe basiert und optische Komponenten gemeinsam benutzt werden können.

## Patentansprüche

1. Vorrichtung zum automatischen Steuern von Beleuchtungseinrichtungen (20) für ein Kraftfahrzeug, mindestens umfassend:
- einer Steuereinrichtung (18), zum Schalten der Beleuchtungseinrichtungen (20), einem ersten Globalsensor (10), zur Erfassung der Umgebungshelligkeit im Frontbereich des Kraftfahrzeugs, der mit der Steuereinrichtung (18) verbunden ist und helligkeitsabhängige erste Signale (S1) an dieselbe zu vermitteln vermag
- und einem Richtungssensor (14), zur Erfassung der Helligkeit in Vorwärtsrichtung des Kraftfahrzeugs, der mit der Steuereinrichtung (18) verbunden ist, wobei
- ein zweiter Globalsensor (16), zur Erfassung der Helligkeit im Heckbereich des Kraftfahrzeugs vorgesehen ist, der helligkeitsabhängige zweite Signale (S2) an die Steuereinrichtung (18) zu vermitteln vermag und
- die Steuereinrichtung (18) die Beleuchtungseinrichtungen (20) in Abhängigkeit der ersten und zweiten Signale (S1, S2) zu schalten vermag,
**dadurch gekennzeichnet, daß**
die Steuereinrichtung (18) derart ausgebildet ist, daß die ersten und zweiten Signale (S1, S2) unterschiedlich gewichtet sind, wobei das der höheren Helligkeit entsprechende Signal (S1, S2) im wesentlichten unberücksichtigt bleibt.

2. Vorrichtung nach einem der vorhergehenden Ansprüche, **dadurch gekennzeichnet, daß** der zweite Globalsensor (16) über einen Fahrzeugbus, insbesondere CAN, LIN oder ISO-Protokoll, mit der Steuereinrichtung (18) verbunden ist.

3. Vorrichtung nach einem der vorhergehenden Ansprüche, **dadurch gekennzeichnet, daß** der zweite Globalsensor (16) durch einen Lichtleiter mit der Steuereinrichtung (18) verbunden ist.

4. Vorrichtung nach einem der vorhergehenden Ansprüche, **dadurch gekennzeichnet, daß** der zweite Globalsensor (16) mittels einer analogen Leitung mit der Steuereinrichtung (18) verbunden ist.

## Claims

1. Apparatus for automatically controlling lighting devices (20) for a motor vehicle, comprising at least:
- a control device (18) for switching the lighting devices (20),
- a first global sensor (10) for detecting the ambient brightness in the front area of the motor vehicle, which is connected to the control device (18) and is capable of sending brightness-dependent first signals (S1) to said control device,
- and a direction sensor (14) for detecting the brightness in the forward direction of the motor vehicle, which is connected to the control device (18),
- a second global sensor (16) for detecting the brightness in the rear area of the motor vehicle, which is capable of sending brightness-dependent second signals (S2) to the control device (18), and
- the control device (18) being capable of switching the lighting devices (20) as a function of the first and second signals (S1, S2),
**characterized in that**
- the control device (18) is designed in such a way that the first and second signals (S1, S2) are differently weighted, the signal (S1, S2) corresponding to the higher level of brightness being left substantially out of account.

2. Apparatus according to one of the preceding claims, **characterized in that** the second global sensor (16) is connected to the control device (18) by a vehicle bus, in particular CAN, LIN or ISO protocol.

3. Apparatus according to one of the preceding claims, **characterized in that** the second global sensor (16) is connected to the control device (18) by a light guide.

4. Apparatus according to one of the preceding claims, **characterized in that** the second global sensor (16) is connected to the control device (18) by means of an analogue line.

## Revendications

1. Dispositif de commande automatique de systèmes d'éclairage (20) d'un véhicule automobile, comprenant au moins :
- un dispositif de commande (18) qui branche le système d'éclairage (20),
- un premier détecteur global (10) qui saisit la luminosité de l'environnement dans la zone située à l'avant du véhicule automobile et qui est relié au dispositif de commande (18) pour transmettre à ce dernier des premiers signaux (S1) dépendant de la luminosité,
- un deuxième détecteur directionnel (14) qui détecte la luminosité dans la direction avant du véhicule automobile et qui est relié à l'unité de commande (18),
- un deuxième détecteur global (16) qui détecte la luminosité dans la partie arrière du véhicule automobile et qui peut transmettre à l'unité de commande (18) des deuxième signaux (S2) dépendant de la luminosité étant prévu et
- le dispositif de commande (18) pouvant brancher les systèmes d'éclairage (20) en fonction des premiers et des deuxièmes signaux (S1, S2),
**caractérisé en ce que**
le dispositif de commande (18) est configuré de telle sorte que les premiers et les deuxièmes signaux (S1, S2) sont pondérés différemment, le signal (S1, S2) qui correspond à la luminosité la plus forte n'étant essentiellement pas pris en compte.

2. Dispositif selon l'une des revendications précédentes, **caractérisé en ce que** le deuxième détecteur global (16) est relié au dispositif de commande (18) par un bus du véhicule, en particulier selon un protocole CAN, LIN ou ISO.

3. Dispositif selon l'une des revendications précédentes, **caractérisé en ce que** le deuxième détecteur global (16) est relié au dispositif de commande (18) par un conducteur de lumière.

4. Dispositif selon l'une des revendications précédentes, **caractérisé en ce que** le deuxième détecteur global (16) est relié au dispositif de commande (18) par un conducteur analogique.
